(19) **Europäisches Patentamt European Patent Office Office européen des brevets**

(11) **EP 4 783 620 A1**

(12) **EUROPEAN PATENT APPLICATION**

(43) Date of publication:
29.07.2026 Bulletin 2026/31

(21) Application number: 26150842.8

(22) Date of filing: 08.01.2026

(51) International Patent Classification (IPC):
H04W 4/021 (2018.01)     H04W 16/18 (2009.01)
H04W 24/08 (2009.01)

(52) Cooperative Patent Classification (CPC):
H04W 4/021; H04W 16/18; H04W 24/08

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 24.01.2025 FI 20255048

(71) Applicant: Nokia Solutions and Networks Oy
02610 Espoo (FI)

(72) Inventors:
• ERMAN, Bilgehan
  Weehawken (US)
• DI MARTINO, Catello
  Uberlandia (BR)
• PANARIELLO, Francesco
  Torre del Greco (IT)

(74) Representative: Nokia EPO representatives
Nokia Technologies Oy
Karakaari 7
02610 Espoo (FI)

(54) **NETWORK PERFORMANCE ANALYSIS IN AREAS OF INTEREST**

(57) In some examples, a method for partitioning an area of interest, AOI, for wireless network performance analysis is provided, whereby to enable wireless network service assurance for mission-critical business operations.

Figure 1

## Description

Technical Field

The present disclosure relates, in general, to network performance analysis.

Background

In dynamic industrial environments such as mining operations, container terminal ports, and autonomous factories for example, it is important to ensure reliable wireless network performance. For example, numerous wireless components and autonomous devices may rely on a robust wireless network in order to properly function. Such components and devices can operate under variable conditions, with factors such as terrain, obstacles, equipment types, and operational activities influencing network performance and Key Performance Indicators (KPIs).

Summary

An objective of the present disclosure is to provide a method and systems to enable spatial indexing for wireless system performance analysis in areas of interest, such as in the context of industrial environments for example.

The foregoing and other objectives are achieved by the features of the independent claims.

Further implementation forms are apparent from the dependent claims, the description and the Figures.

A first aspect of the present disclosure provides a method for partitioning an area of interest, AOI, for wireless network performance analysis, the method comprising dividing the AOI into multiple regions using a selected polygonal partitioning primitive, adjusting a diameter of the selected polygonal partitioning primitive for each region of the multiple regions to determine an optimized diameter for the AOI by performing, setting an initial diameter for the selected polygonal partitioning primitive for selected regions of the multiple regions, calculating respective first measures for each property of a set of selected properties for each selected region of the multiple regions when the selected polygonal partitioning primitive has the initial diameter, wherein each property of the set of selected properties comprises a performance related network property, increasing the diameter of the selected polygonal partitioning primitive for each selected region of the multiple regions, calculating respective second measures for each property of the set of selected properties for each selected region of the multiple regions when the selected polygonal partitioning primitive has the increased diameter, calculating, using the first measures and the second measures, a change in value of each property of the set of selected properties for each selected region of the multiple regions, determining whether the calculated change in value of each property is less than a predetermined threshold value, and on the basis of the determination for the calculated change in value of each property, evaluating a continuation condition for adjusting the diameter of the selected polygonal partitioning primitive for each region of the multiple regions.

Hexagonal polygons can be used as selected polygonal partitioning primitives for spatial indexing. In the context of wireless system performance analysis, these offer several benefits. For example, hexagons offer an ideal balance between circular shapes, representing the isotropic nature of wireless signals, and the need for seamless tessellation. They simplify computations for grid-based algorithms, such as clustering and interpolation, while requiring fewer assumptions than other polygons. Hexagons also provide consistent distances from the center to the edges, minimizing edge effects and ensuring uniform area of influence. This results in more accurate performance measurements, reduces signal interference at region edges, and allows for scalable multi-resolution analysis by adjusting hexagon size. Furthermore, their 120° internal angle offers stability compared to triangles or squares.

Accordingly, in industrial settings where network reliability is crucial, and where managing the complexity of numerous wireless components, autonomous devices, and dynamic environments like mines or factories is a significant challenge, dividing an area of interest (which can comprises a portion or all of the industrial setting) into multiple regions using a selected polygonal partitioning primitive enables network performance analysis to be performed to provide wireless network service assurance for mission-critical business operations.

In an implementation of the first aspect, the method can further comprise, for each selected region of the multiple regions, determining presence of line-of-sight, LOS, to respective ones of multiple network cells within or for the AOI, and on the basis of the determined LOS presence, calculating respective measures of a first total distance to the each of the multiple network cells for each of the selected regions when the selected polygonal partitioning primitive has the initial diameter, and calculating respective measures of a second total distance to the each of the multiple network cells for each of the selected regions when the selected polygonal partitioning primitive has the increased diameter, and calculating, for each region, a change in total distance using the first total distance and the second total distance.

In an example, the method can further comprise outputting a final set of regions with the optimized diameter for the AOI. The method can further comprise ensuring an average number of data samples within each selected region exceeds a predefined sample threshold. The network properties can comprise key performance indicators, KPIs, associated with wireless network performance. For a given geolocation comprising multiple AOIs, the method can further comprise partitioning each AOI of the multiple AOIs at respective different resolutions, each resolution of the multiple resolutions defined by a diameter of a selected polygonal partitioning primitive for regions of an AOI. Some of the AOIs of the multiple AOIs can overlap. Each selected region can be associated with a respective network management function for network performance analysis.

A second aspect of the present disclosure provides apparatus comprising means for dividing an area of interest, AOI, into multiple regions using a selected polygonal partitioning primitive, means for adjusting a diameter of the selected polygonal partitioning primitive for each region of the multiple regions, whereby to determine an optimized diameter for the AOI, wherein the means for adjusting the diameter comprises, means for setting an initial diameter for the selected polygonal partitioning primitive for selected regions of the multiple regions, means for calculating respective first measures for each property of a set of selected properties for each selected region of the multiple regions when the selected polygonal partitioning primitive has the initial diameter, wherein each property of the set of selected properties comprises a performance related network property, means for increasing the diameter of the selected polygonal partitioning primitive for each selected region of the multiple regions, means for calculating respective second measures for each property of the set of selected properties for each selected region of the multiple regions when the selected polygonal partitioning primitive has the increased diameter, means for calculating, using the first measures and the second measures, a change in value of each property of the set of selected properties for each selected region of the multiple regions, and means for evaluating, on the basis of the determination for the calculated change in value of each property, a continuation condition for adjusting the diameter of the selected polygonal partitioning primitive for each region of the multiple regions.

In an implementation of the second aspect, the apparatus can further comprise, for each selected region of the multiple regions, means for determining presence of line-of-sight, LOS, to respective ones of multiple network cells within or for the AOI, and on the basis of the determined LOS presence, means for calculating a first total distance to the each of the multiple network cells over the selected regions when the selected polygonal partitioning primitive has the initial diameter, and means for calculating a second total distance to the each of the multiple network cells over the selected regions when the selected polygonal partitioning primitive has the increased diameter, and means for calculating a change in total distance using the first total distance and the second total distance.

In an example, the apparatus can further comprise means for ensuring an average number of data samples within each region exceeds a predefined sample threshold. An optimized diameter for the AOI can comprise a value for the diameter of the selected polygonal partitioning primitive when the calculated change in value of each property is less than a predetermined threshold value.

The apparatus can further comprise means for outputting a final set of regions with the optimized diameter for the AOI.

The apparatus can further comprise means for, in a given geolocation comprising multiple AOIs, partitioning each AOI of the multiple AOIs at respective different resolutions, each resolution of the multiple resolutions defined by a diameter of a selected polygonal partitioning primitive for regions of an AOI. Some of the AOIs of the multiple AOIs can overlap. Each selected region can be associated with a respective network management function for network performance analysis.

A third aspect of the present disclosure provides a system for partitioning an area of interest, AOI, for optimized wireless network performance analysis, comprising at least one processor, and at least one memory storing instructions that, when executed by the at least one processor, cause the system at least to divide the AOI into multiple regions using a selected polygonal partitioning primitive, adjust a diameter of the selected polygonal partitioning primitive for each region of the multiple regions to determine an optimized diameter for the AOI by performing, set an initial diameter for the selected polygonal partitioning primitive for selected regions of the multiple regions, calculate respective first measures for each property of a set of selected properties for each selected region of the multiple regions when the selected polygonal partitioning primitive has the initial diameter, wherein each property of the set of selected properties comprises a performance related network property, increase the diameter of the selected polygonal partitioning primitive for each selected region of the multiple regions, calculate respective second measures for each property of the set of selected properties for each selected region of the multiple regions when the selected polygonal partitioning primitive has the increased diameter, calculate, using the first measures and the second measures, a change in value of each property of the set of selected properties for each selected region of the multiple regions, and on the basis of the determination for the calculated change in value of each property, evaluate a continuation condition for adjusting the diameter of the selected polygonal partitioning primitive for each region of the multiple regions.

In an implementation of the third aspect, the at least one memory can store instructions that, when executed by the at least one processor, cause the system at least to output a final set of regions with the optimized diameter for the AOI, wherein the optimized diameter for the AOI comprises a value for the diameter of the selected polygonal partitioning primitive when the calculated change in value of each property is less than a predetermined threshold value. The at least one memory can store instructions that, when executed by the at least one processor, cause the system at least to ensure an average number of data samples within each region exceeds a predefined sample threshold.

The at least one memory can store instructions that, when executed by the at least one processor, cause the system at least to output a final set of regions with the optimized diameter for the AOI.

The at least one memory can store instructions that, when executed by the at least one processor, cause the system at least to, in a given geolocation comprising multiple AOIs, partition each AOI of the multiple AOIs at respective different resolutions, each resolution of the multiple resolutions defined by a diameter of a selected polygonal partitioning primitive for regions of an AOI. Some of the AOIs of the multiple AOIs can overlap. Each selected region can be associated with a respective network management function for network performance analysis.

These and other aspects of the invention will be apparent from the embodiment(s) described below.

Brief Description of the Drawings

In order that the present disclosure may be more readily understood, embodiments will now be described, by way of example, with reference to the accompanying drawings, in which:

Figure 1 is a schematic representation of part of a system according to an example;

figure 2 is a schematic representation of part of a system according to an example;

Figure 3 is a schematic representation of a digital twin framework for a network according to an example;

Figure 4 is a schematic representation of overlapping regions according to an example;

Figure 5 is a flowchart depicting an instantiation process of PVNS components, according to an example;

Figure 6 is a flowchart depicting a query process, according to an example; and

Figure 7 is a schematic representation of a machine according to an example.

Detailed Description

Example embodiments are described below in sufficient detail to enable those of ordinary skill in the art to embody and implement the systems and processes herein described. It is important to understand that embodiments can be provided in many alternate forms and should not be construed as limited to the examples set forth herein.

Accordingly, while embodiments can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

The terminology used herein to describe embodiments is not intended to limit the scope. The articles "a," "an," and "the" are singular in that they have a single referent, however the use of the singular form in the present document should not preclude the presence of more than one referent. In other words, elements referred to in the singular can number one or more, unless the context clearly indicates otherwise. It will be further understood that the terms "comprises," "comprising," "includes," and/or "including," when used herein, specify the presence of stated features, items, steps, operations, elements, and/or components, but do not preclude the presence or addition of one or more other features, items, steps, operations, elements, components, and/or groups thereof. The term "and/or" is only an association relationship for describing associated objects and represents that three relationships may exist such that A and/or B may indicate that A exists alone, A and B exist at the same time, or B exists alone. The character "/" generally represents that the associated objects are in an "or" relationship.

Unless otherwise defined, all terms (including technical and scientific terms) used herein are to be interpreted as is customary in the art. It will be further understood that terms in common usage should also be interpreted as is customary in the relevant art and not in an idealized or overly formal sense unless expressly so defined herein.

The following contains specific information related to implementations of the present disclosure. The drawings and their accompanying detailed disclosure are merely directed to implementations. However, the present disclosure is not limited to these implementations. Other variations and implementations of the present disclosure will be obvious to those skilled in the art.

The phrases "in one implementation," or "in some implementations," may each refer to one or more of the same or different implementations. The term "coupled" is defined as connected whether directly or indirectly through intervening components and is not necessarily limited to physical connections. The expression "at least one of A, B and C" or "at least one of the following: A, B and C" means "only A, or only B, or only C, or any combination of A, B and C."

The terms "system" and "network" may be used interchangeably.

For the purposes of explanation and non-limitation, specific details such as functional entities, techniques, protocols, and standards are set forth for providing an understanding of the present disclosure. In other examples, detailed disclosure of well-known methods, technologies, systems, and architectures are omitted so as not to obscure the present disclosure with unnecessary details.

Persons skilled in the art will immediately recognize that any network function(s) or algorithm(s) disclosed may be implemented by hardware, software or a combination of software and hardware. Disclosed functions may correspond to modules which may be software, hardware, firmware, or any combination thereof.

A software implementation may include machine- and/or computer- readable and/or executable instructions stored on a machine- and/or computer-readable medium such as memory or other types of storage devices. One or more microprocessors or general-purpose computers with communication processing capability may be programmed with corresponding executable instructions and perform the disclosed network function(s) or algorithm(s).

The microprocessors or general-purpose computers may include Applications Specific Integrated Circuitry (ASIC), programmable logic arrays, and/or using one or more Digital Signal Processor (DSPs). Although some of the disclosed implementations are oriented to software installed and executing on computer hardware, alternative implementations implemented as firmware or as hardware or as a combination of hardware and software are well within the scope of the present disclosure. The computer readable medium includes but is not limited to Random Access Memory (RAM), Read Only Memory (ROM), Erasable Programmable Read-Only Memory (EPROM), Electrically Erasable Programmable Read-Only Memory (EEPROM), flash memory, Compact Disc Read-Only Memory (CD-ROM), magnetic cassettes, magnetic tape, magnetic disk storage, or any other equivalent medium capable of storing computer-readable instructions.

Certain abbreviations may be used herein, such as, for example:

PVNS - Predictive Vectorial Nano Simulator, which comprises a network function

PVNSm - PVNS module

KPI - Key performance indicators

ML - Machine learning

RSRP - Reference Signal Received Power

SLA - Service level agreement

SLO - Service level objective

SLOm - SLO model

A digital twin is a virtual representation of a physical object, system, or process that spans its lifecycle, is updated from real-time data, and uses simulation, machine learning, and reasoning to help decision-making. This concept can be utilized in various industries, including manufacturing, healthcare, transportation, and urban planning, to optimize performance, predict issues, and enhance the overall design and functionality of systems.

A digital twin comprises a digital model or replica of a physical system (comprising, e.g., a real-world object or system that is being modelled, which may be a simple product to a complex manufacturing process for example) that aims to mirror the physical system. Such a digital model is typically built using data collected from sensors and other data-gathering methods.

Creating efficient digital twins for crucial wireless network performance analysis in environments like mining is challenging. Network reliability in industrial settings is complex due to numerous wireless components, autonomous devices, and dynamic factors. Consistent SLO (Service Level Objectives) compliance is difficult due to variable conditions affecting KPIs (Key Performance Indicators). High-dimensional data collection at frequent intervals complicates computations.

Centralized prediction models fall short as they do not account for local variations influenced by terrain, obstacles, equipment, and activities. A dynamic solution must predict SLO compliance in specific areas by considering each location's unique traits. This invention introduces an analytical model using compact predictive vectorial nano simulators to manage data variability and provide business solutions. Algorithms will identify relevant environmental features and deploy adaptive predictive agents or models that adjust to various conditions using localized data to accurately predict KPIs.

These agents should assess the probability of meeting KPI thresholds reliably. The system needs to handle high-dimensional, variable data, decomposing complexity with these simulators. Integrating adaptive algorithms into a cohesive framework is essential for real-time decision-making and ensuring SLO compliance in dynamic industrial environments.

Within the context of digital twin frameworks, aspects of the present disclosure address the complex challenge of wireless network service assurance for mission-critical business operations through the parallel deployment of network functions. Such network function may also be interchangeably referred to herein as predictive vectorial nano simulators (PVNS).

According to an example, two phases are provided for deployment of network functions: initially, the instantiation of PVNS components, which can occur periodically throughout, e.g., a day or some other predetermined time period, and the on-demand or periodic execution of queries by the PVNS components.

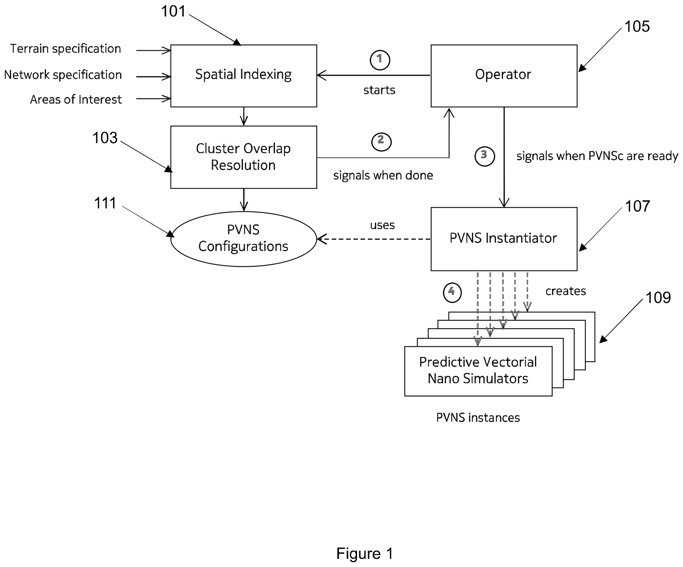

Figure 1 is a schematic representation of part of a system according to an example. In the example of figure 1, PVNS module components are depicted that show periodic PVNS instantiations at run-time, e.g., in the specific exemplary context of a mining operation, twice a day after each mine explosive blast. For example, in mines such as open-pit iron mines, explosive blasts may alter the landscape layout twice a day. Similarly, in container terminal ports, the configuration and contents of the layout inventory are constantly changing. In these scenarios, the operational sequence depicted in Figure 1 may be executed multiple times per day.

In the example of figure 1, several components of a network function according to an example are depicted, all of which are described in more detail below. For example, a spatial indexing system 101, which receives as input information from an operator 105 as well as other information that is specific to the location in question, such as information relating to an AOI, a network specification and a terrain specification for the AOI. A region overlap resolution system 103 receives output from the spatial indexing system 101 and outputs data representing a score for regions of overlap in an AOI in order to enable prioritisation of a region or regions that maximizes a balance between selected criteria, ensuring optimal network performance analysis. The output of system 103 is used for configuration of network functions 111 and can also be presented to an operator 105. The operator 105 can trigger a network function instantiator 107 to create a set of network function instances 109 for regions of an AOI.

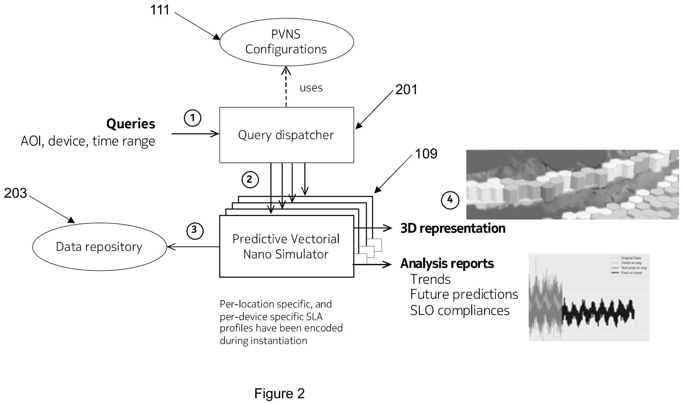

Similarly, figure 2 is a schematic representation of part of a system according to an example. In the example of figure 2, PVNS module components are depicted showing PVNS query processing in which a sequence of operations where queries related to network performance in specific areas of interest (such as sections of an open pit mine) are processed by PVNS components. Queries specifying, e.g., an area-of-interest, device, and time range are routed to the PVNS 109 using a query dispatcher 201. The PVNS 109 conduct performance analysis for a designated region using data from a repository 203 of KPIs and pre-configured SLA profiles (SLAp). In an example, the PVNS can generate 3D visualizations and analysis reports, providing insights into trends, future predictions, and SLO compliance for the queried area, aiding in localized network performance optimization.

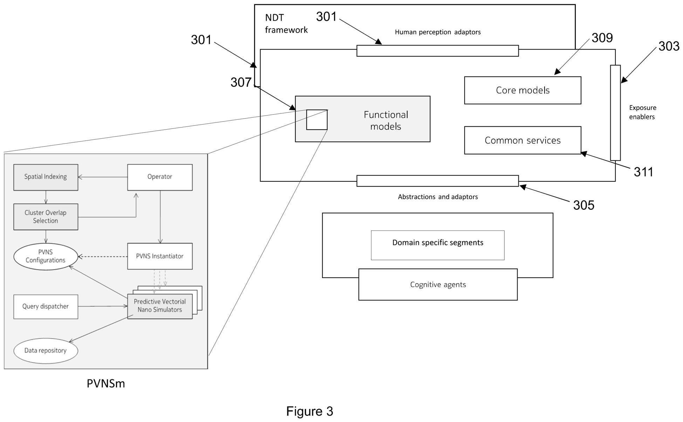

Figure 3 is a schematic representation of a digital twin framework for a network, such as a wireless telecommunication network, in which a system according to an example is provided. In the example of figure 3, the network digital twin (NDT) framework 301 comprises three components: (1) network abstractions and adaptors 305, (2) human perception adaptors 301, and (3) exposure enablers 303. The NDT framework as depicted in figure 3 comprises a set of functional models 307, of which one comprises the functional model as described above with reference to figures 1 and 2. Core models 309 represent NDT-specific components, including, for example, state/data, resource, control, service, and cognitive models (learning, prediction, decision). Common services 311 within the framework can handle system operations such as platform management, compute, storage, connectivity, and security.

A major challenge in NDT implementations is network state observation at very small timescales. Traditional network monitoring operates on intervals ranging from 1 to 15 minutes, whereas sub-second measurements in NDTs demand new telemetry optimization techniques, driven by cognitive network agents at the data source. Human perception adaptors provide the interfaces for visualizations and human-initiated control actions. As closed-loop network control becomes more prevalent, machine-to-machine connectivity of NDTs will grow in significance. Exposure enablers facilitate interconnectivity between NDT instances and external systems by providing necessary abstractions and common APIs, enabling developers to participate in the programmable network ecosystem. According to an example, within this framework, Predictive Vectorial Nano Simulator module (PVNSm) can serve as one of the functional models.

According to an example, and as briefly described above, a PVNSm comprises three components:

1) A Spatial Indexing system 101: The spatial indexing system uses a polygonal partitioning primitive, such as hexagonal polygons for example, to partition a given area of interest (AOI) into regions in order to enable optimisation of wireless network performance.

In an example, hexagonal polygons are used as they provide superior coverage and minimal distortion, allowing for a uniform distribution of predicted values across the AOI. In order to partition an AOI using the polygonal partitioning primitive, an iterative adjustment of the diameter d of the primitive (e.g., hexagons) can be performed.

For example, a minimum diameter, $D_{min}$, can be iteratively increased by a specified increment $\Delta_d$, while ensuring line-of-sight (LOS) to network cells, minimizing variance in network properties, and keeping distance changes within acceptable thresholds. For each hexagon for example, the total distance to nearby cells is calculated, and the process continues until the network properties between adjacent regions and the distance metrics satisfy specified criteria. The result is an optimal hexagonal tessellation for the AOI, balancing coverage and performance consistency for wireless network analysis in industrial settings. It will be appreciated that other shapes may be used for the polygonal partitioning primitive as desired, such as circles, squares, triangles and so on.

2) An Overlap Selection system 103: In an Operation Zone (OZ), regions modelled as, e.g., hexagonal cells ($h_i$), may overlap, requiring a decision on which region to prioritize for network service assurance analysis. According to an example, each hexagon can comprise a specific SLO profile ($\psi_i$) with critical parameters, such as network performance requirements, and some hexagons offer more granular data due to smaller size or higher measurement density.

In an example, a decision-making process for overlapping regions uses a utility function that evaluates each region based on three key factors: SLO criticality, granularity (smaller radius means more detailed data), and quality of assurance outcomes. For example, a utility function can assign a score to each hexagon that overlaps with another, prioritizing the one that maximizes the balance between these criteria, ensuring optimal network performance analysis.

3) Predictive Vectorial Nano Simulator (PVNS) 109: The PVNS operates as a predictive, statistical engine, comprising, in an example, a network function in a wireless telecommunication network. Its computational framework can be implemented using a Service Level Objective model (SLOm), which underpins the cognitive and statistical processes for managing mission-critical wireless network operations aligned with business functions. In an example, the SLOm can be used to govern the execution of PVNS modules within spatially indexed regions for an AOI. Each PVNS can be assigned a specific SLA profile (SLAp) tailored to the area it covers. Each PVNS can process queries related to an AOI, integrating spatial, temporal, and device attributes to assess SLO compliance. By leveraging statistical and machine learning methods, the model can perform trend analysis, future value predictions, and evaluates SLO compliance by comparing KPI trends against region-specific SLAp.

According to an example, within an Operation Zone (OZ) comprising a given geolocation of an Industrial Complex (IC), a method for partitioning an AOI for wireless network performance analysis is provided. Multiple AOIs may be present in the given geolocation, and some or all AOIs can overlap with one another or remain distinct. A given OZ may not be fully covered by AOIs.

An AOI, $A_k$, can be spatially indexed into regions $h_i$, which, in an example, completely cover all $A_k$. Spatial indexing regions $h_i$ serve as the foundational structure for PVNS, and each PVNS can perform its computations for SLO compliance on the range-bound spatial region.

In the context of industrial operations, multiple device types are utilized, each potentially hosting distinct applications or services. By way of illustration, in open-pit mining operations, devices such as autonomous hauling trucks and drillers are employed, hereinafter referred to collectively as "devices." Each Device may run various applications or services; however, for the sake of brevity and simplicity in model descriptions, it is hereby assumed that each device is associated with a singular application type or service type. Consequently, the term "device" shall encompass both the physical device and its corresponding application and service, and no separate entities shall be defined for the application or the service themselves in the formal model expressions.

An SLA profile (SLAp) is a set of expected service performance criteria for each network KPI, defined per service or device type, which outlines the quantifiable performance thresholds, acceptable ranges, and conditions that must be maintained. This profile establishes the baseline for service delivery, adherence to contractual obligations, and serves as the foundation for monitoring, reporting, and enforcing compliance across different operational environments.

According to an example, region densities for spatial indexing can vary across different AOIs. The partitioned structure for a given AOI is determined by the Spatial Indexing system, described in more detail below. In cases where regions overlap between different AOIs, the Region Overlap Selection system, also described in more detail below, can be used to select the most appropriate SLAp for each location.

Each PVNS may be associated with different SLAp. The PVNSs carry out network service assurance computations in accordance with SLO models (SLOm), which are described in mor detail below.

According to an example, an AOI is logically divided into multiple regions using a selected polygonal partitioning primitive, such as a hexagonal polygon for example, which provide uniform distribution of predicted values across the geometric shape. A hexagonal grid can offer better coverage and minimize distortion compared to other tessellation methods, making it a good choice for spatial analysis, however other shapes may be selected.

In an example, to determine the optimum diameter d of hexagonal regions for wireless network performance analysis in an industrial AOI, several factors need to be considered, such as the line-of-sight (LOS) to network cells, the variance of the network performance properties of the regions, and the total distance to cells. A goal is to maximize d within specified limits while ensuring that network performance remains consistent across regions and that significant changes in distance metrics are within acceptable thresholds. A cell distance computation can determine the differential across the area (not for absolute value interpretation). The spatial indexing system can also determine the average number of data samples in a given area in order to ensure that this exceeds a threshold K. For example, to ensure the accuracy of statistical computations, a minimum of 20 to 30 samples is typically expected. Therefore, as the number of measurement samples increases, smaller hexagonal regions can be configured, allowing for finer spatial granularity in the analysis.

According to an example, the following definitions are provided to formalize the framework for spatial indexing:

A: the geophysical area to be analyzed, AOI

$D_{min}$: minimum diameter of hexagons (e.g., 10 m)

$D_{max}$: maximum diameter of hexagons (e.g., 100 m)

$D_{nolos}$: distance assigned when no LOS exists

$\boldsymbol{\psi} : \mathbb{R}^3 \xrightarrow{x,y,z} \mathbb{R}^m$ property vector lookup mapping at a given 3D location of the A

$D_\psi$: threshold for property vector difference between regions

$D_\delta$: threshold for change in total distance to cells

$\Delta_d$: diameter increments for each iteration

$N_c$: number of cells (cell towers) within the A

$\{g_{cell}\}$: positions of the cells, where $k$ = 1, 2, ... , $N_c$

K: average number of samples across AOI

During an initialization procedure, the initial diameter, $d$, of each region can be set such that $d = D_{min}$. Set a previous value for the diameter, $d_{prev}$, to $d_{prev} = d$, so that when the system stops at a current value for $d$, $d_{prev}$ will be used for the hexagon diameters. Initialize previous total distance $d_{Tprev}(x_i) = 0$ for all hexagon centers $x_i$.

Following this initialization, the AOI is divided into hexagonal regions $h_i$ with diameter $d$. While $d < D_{max}$ (i.e., while the diameter s less than a predetermined maximum value), the following iterative steps are performed:

for each hexagon $h_i$:

> for each cell $cell_k$:

>> determine LOS between $h_i$ and $cell_k$ in 3D space
>> if LOS exists, calculate $d(h_i, cell_k)$ using Euclidean distance
>> else, set

$$d(x_i, cell_k) = D_{nolos}$$

compute total distance to cells:

$$d_{Tcurr}(h_i) = \sum_{k=1}^{N_c} d(h_i, cell_k)$$

compute change in total distance:

$$\delta_{Td}(h_i) = d_{Tcurr}(h_i) - d_{Tprev}(x_i)$$

update total distance previous:

$$\delta_{Tprev}(h_i) = d_{Tcurr}(h_i)$$

Check stopping conditions:

Check property vector difference:
for each pair of neighboring hexagons ($h_i$, $h_j$):

> continue if average number of data samples for any device, any KPI is < $K$

> stop if the difference in network properties between regions is too large:

$$\psi_i = \boldsymbol{\psi}(x_i, y_i, z_i)$$

$$\psi_i = \boldsymbol{\psi}(x_j, y_j, z_j)$$

$$distance(\psi_i, \psi_j) > D_\psi$$

$$d = d_{prev}$$

> stop if the change in total distance to cells exceeds the threshold:

$$\delta_{Td}(h_i) > D_\delta$$

$$d_{prev} = d$$

$$d_{prev} = d$$

$$d = d + \Delta_d$$

Continue.

The system outputs:

> Target diameter d for hexagonal regions for the given criteria

> Final set of hexagonal regions $\{h_i\}$ with diameter $d$

> Property vectors $\{\psi_i\}$ for each hexagon region

This ensures that the chosen hexagon diameter balances spatial coverage with network performance consistency, and statistical computation accuracy providing a systematic approach to wireless network service performance analysis in industrial settings.

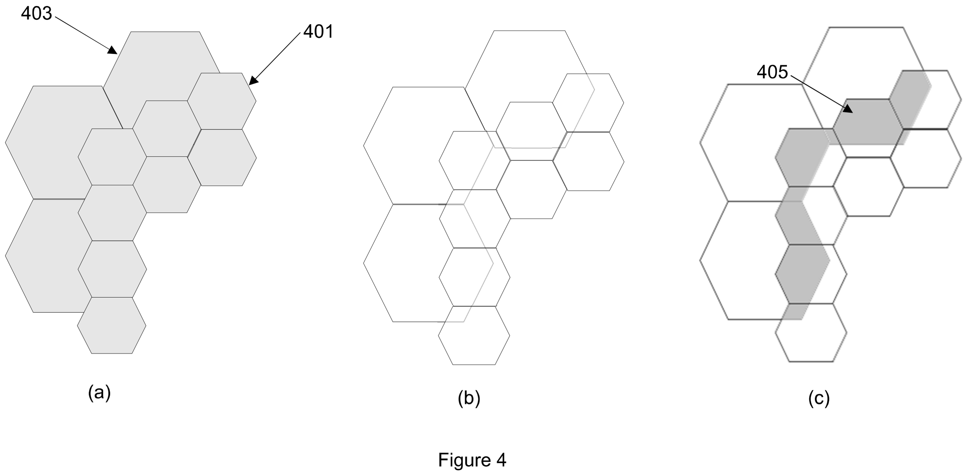

As noted above, there may be one or more overlapping areas $A_k$ as shown in Figure 4. Each region, modelled as a hexagon $h_i$, within these areas will have specific properties related to network service assurance analysis, such as SLAp parameters and functions defined per KPI and per device.

PVNSs conduct network service assurance computations for their bound region $h_i$, producing a single outcome applied uniformly to all points within a region for each KPI. Each $h_i$ region is associated with a SLAp $\psi_i$, which is used to guide these computations. However, some profiles may be more critical than others. For example, some profiles may demand more stringent network performance requirements, and some regions may provide more granular information due to their smaller size or higher measurement density.

When overlaps between regions occur, a decision must be made regarding which region to prioritize for the overlapping area. This choice depends on various factors: a smaller radius $r_i$ may indicate a more granular and valuable dataset, while a SLAp with more critical parameters may take precedence due to its importance. Additionally, the SLO compliance outcome quality-such as the confidence interval quantifications in the results-can also serve as a crucial factor in the decision-making process. Consequently, in cases of overlap, a region that optimally balances granularity, criticality of SLAp attributes, compliance computation outcome quality, and other relevant considerations that can be added is selected according to an example.

With reference to figure 4, a set of regions are depicted for part of an AOI. In Figure 4a it can be seen that there are regions of different size, with some smaller regions 401 that overlap with some larger regions 403. The degree of overlap between regions is illustrated in figures 4b and 4c. In particular, figure 4c shows the amount of overlap 405 between regions (shown as greyed out areas between larger 403 and smaller 401 regions).

In order to determine overlapping hexagonal regions, each hexagon $h_i$ is represented by its center coordinates $(x_i, y_i)$ and diameter $d_i$. The distance $D_{ij}$ between the centers of every pair of hexagons $h_i$ and $h_j$ can be computed according to:

$$D_{ij} = \sqrt{\left(x_i - x_j\right)^2 + \left(y_i + y_j\right)^2}$$

A threshold distance $T_{ij}$ for potential overlap is determined. For example, for regular hexagons, an overlap occurs if:

$$D_{ij} < \frac{d_i + d_j}{2}$$

Accordingly, if $D_{ij} < T_{ij}$, mark $h_i$ and $h_j$ as overlapping hexagons.

According to an example, for overlapping hexagonal regions, a utility function that provides a priority score for each $h_i$ in overlapping areas that captures these criteria can be used. The decision as to which region to prioritize in the overlapping region will depend on maximizing this utility function.

Consider that:

$C_i$ is the criticality of the SLAp attributes for hexagon $h_i$
$r_i$ is the radius (granularity) of hexagon $h_i$ (smaller $r_i$ implies higher granularity)
$Q_i$ is the assurance outcome quality for $h_i$ (higher means better assurance results)

A utility function $U(h_i)$ for each hexagon $h_i$ that captures its value in a given overlapping region is provided that combines the criticality of the SLAp, the granularity, and the assurance outcome quality, such that:

$$U(h_i) = w_C \cdot C_i + w_r \cdot \frac{1}{r_i} + w_Q \cdot Q_i$$

where:

$C_i$ is the criticality of the SLO profile for $h_i$,
$r_i$ is the radius of the hexagon (smaller $r_i$ means more detail),
$Q_i$ is the assurance outcome quality,
$w_C$, $w_r$, $w_Q$ are weights that balance the importance of each factor ($w_C$ emphasizes SLAp criticality (a higher weight means more importance on mission-critical SLAs), $w_r$ emphasizes granularity (in an example, smaller $r_i$ is used, $1/r_i$ is used to assign higher utility to hexagons with smaller radii), and $w_Q$ emphasizes the quality of the assurance outcome for $h_i$).

This utility function $U(h_i)$ gives a score for each hexagon in the overlapping area, considering how critical it is, how detailed its granularity is, and how good the assurance results are.

When two or more hexagons $h_i$, $h_j$, $h_k$, ... overlap, the hexagon to select in the overlapping region is, according to an example, the one with the highest utility score:

$$Select\ h^* = \arg\max_{\{h \in overlap\}} U(h)$$

This decision rule ensures that the hexagon with the best combination of SLAp criticality, granularity, and compliance computation outcome quality is selected for each overlapping region.

In an example, to ensure comparability across different criteria (since $C_i$, $r_i$, and $Q_i$ may have different units or ranges), each factor can be normalized. For example:

criticality $C_i$ can be normalized to a range of 0 to 1

radii $r_i$, can be normalized so that $1/r_i$ falls within a reasonable range
quality $Q_i$ can be normalized on a scale from 0 to 1.

A normalized utility function would then be:

$$U(h_i) = w_C \cdot \hat{C}_i + w_r \cdot \frac{1}{\hat{r}_i} + w_Q \cdot \hat{Q}_i$$

where $\hat{C}_i$, $\hat{r}_i$, and $Q_i$ are the normalized values.
It should be noted that PVNSs can execute their computations before region selections are made.
According to an example, a Service Level Objective Model (SLOm) forms the kernel of statistical, and cognitive computations required for answering queries within the domain of mission-critical wireless network operations with joint business operations.
Queries come from business operations for a given area-of-interest. As described above, AOIs are divided into spatial indexing regions. A network function, in the form of a PVNS, is associated with each region. In an example, a network function for a region may be implemented as part of a cloud-based system, or provided as part of a system that is local to, e.g., an AOI and/or region.
The SLAp assigned to a PVNS during instantiation defines the operational parameters of each PVNS for computing SLO compliance based on SLOm.
In the following, index i indicates association of the entities with individual PVNS - entities such as SLAp, and functions.
These generalized entities in the input domain include:

    1. Queries with spatial, temporal, and object attributes,
    2. The Area-of-Interest (AOI)
    3. Temporal domain bounds (timeframes of interest),
    4. Device types,
    5. KPI types, and measured values,
    6. SLAp with threshold value objects, and comparative assurance functions if being used.

The components in the compute stage of the model and also as reflected at the output domain include:
For a given SLAp

    1. Per KPI, per device value trends and future value predictions against SLAp references,
    2. Per KPI, per device SLO compliance: past trends, current status, future predictions,
    3. Composite SLO compliance,
    4. Composite SLO compliance trend,
    5. Composite SLO compliance future prediction,

In the output domain, in addition to the compute stage outputs:

High-dimensional representations of computational results, such as 3D graphics
Let Q represent the set of all queries, each with spatial, temporal, and object attributes. We define a query as:

$$q = \{A_q, T_q, D_q\} \in Q$$

where:

    $A_q$ is an area of interest,
    $T_q = [t\_start, t\_end]$ is a temporal domain of interest,
    $D_q$ is a set of objects or device types.

Let A represent the operational environment (e.g., a section of a mining site or autonomous factory). This can be modelled as a collection of distinct subregions:

$$A = \{a_1, a_2, \ldots, a_n\}$$

Each $a_i$ has its own properties related to infrastructure and operational conditions.
Let T denote the timeframes of interest. These bounds correspond to queries, so:

$$T = \{T_q \mid q \in Q\}$$

Let D be the set of device types, and for each device $d \in D$. Hence:

$$D = \{d_1, d_2, \ldots, d_k\},$$

Let H represent the spatial indexing scheme. This can be thought of as a function that maps queries to spatial indexing regions within the AOI $A$:

$$H: Q \times A \to \mathbb{R}^3 \text{ (or higher dimensions)},$$

$$\{h_i\} = H(A), \qquad i = 1, 2, \ldots, N$$

$$PVNS_i \leftrightarrow h_i$$

A PVNS instance is bound to each $h_i$
In an example, $H$ produces hexagonal spatial indexing regions that fully cover $A$.
Let K represent the set of KPIs, each associated with device types and having properties like measured values. We define:

$$k = \{d, v, t, l\},$$

$$k \in K, d \in D$$

where:

d is the device associated with the KPI,

v is the measured value for the KPI with spatial and temporal qualifications

$t \in \mathbb{R}$ : time

$l \in \mathbb{R}^3$ : geophysical location in Euclidean space

Let $S_i$ represent SLAp per PVNS. For each profile $s \in S$, we define:

$$s_i \ = \ \{V_{kd}, f_{kd}\}$$

where:

$V_k$ is the value property per KPI (e.g., acceptable threshold) for a given device.

The function $f_k$ is the comparative compliance function that evaluates the deviation of measured KPI values from predefined SLO targets for a given device. This function quantifies the criticality of the deviation between the KPI value and the target threshold. For instance, in one implementation, the criticality measure could be represented as a scale from 1 to 5, corresponding to levels such as "Normal", "Low", "Moderate", "High", and "Critical".

Note that the profile is indexed with i, meaning that it can be specialized per PVNS via external knowledge lookup for a given location.

For a group of KPIs and devices, a composite SLO can be formed. Let $s_C$ represent the function that computes the collective SLO:

$$s_C = g(\{\alpha_{kd} \cdot f(k, d)\}) , \, k \in K, d \in D$$

The results for each KPI and device type may be weighted differently by a factor $\alpha_k \alpha k$. The function $g$ selects the maximum of the $\alpha \cdot f$ product. It is noted that the function $g$ may be defined differently in various embodiments of the invention. Additionally, in different embodiments, the $s_C$ value may be either a scalar or a set of categorical values.

The output of the PVNS computations can be represented in high-dimensional space $\mathbb{R}^n$, capturing the spatial, temporal, and probabilistic dimensions of the analysis:

$$R_{HD} \ \in \ \mathbb{R}^n$$

where n depends on the number of KPIs, SLAp, and regioning results.

According to an example, a combination of the computations defined by SLOm and executed by the PVNS components can be performed, thereby forming a unique functional set that is specific to the overall context described herein, namely:

1. Set of KPI measurements
2. Device types
3. SLA profile
4. Individual KPI and device trends and predictions against the Service Level Objective
5. For a given device type, collective trends and predictions of the KPI set against SLO

The trend analysis function for KPI progression (with the time range determined by query attributes) utilizes a variety of algorithms and methods to detect and analyse trends. In one example, the process includes steps such as outlier smoothing, millisecond-level resampling, and Fourier Transformation for detecting and quantifying periodic components. Linear detrending is applied to remove long-term trends, followed by techniques such as the Mann-Kendall test, LOESS smoothing, and fitting regression models, including linear, logarithmic, polynomial, and power functions. Time series forecasting is enhanced using Long Short-Term Memory (LSTM) networks, with MSE assessments conducted on Train/Test partitions. Statistical distribution models are employed to fit Confidence Intervals (CI), combined with Exponential Moving Average (EMA) computations. The prediction interval is then refined using CI and EMA assessments, and the results are presented through detailed visualization charts.

The Training/Test partitioning allow determining the best trend analysis fit for the past data. Then, for future value predictions, this selected algorithm would be used to make predictions.

The SLO compliance measure is provided by the compliance function $f_{kd}$ of SLAp, as described above. Using this function, the past SLO compliance measures can be obtained. By applying the trend analysis methods described previously, the historical SLO compliance trend can be generated based on past data. The current SLO compliance is directly calculated using the $f_{kd}$ function with real-time KPI/device values. Future SLO compliance measures are predicted by first forecasting future KPI/device values, as outlined earlier. These predicted values are then fed into the $f_{kd}$ function to generate future trends of the SLO compliance measures.

As defined above, the composite SLA compliance is formulated as:

$$S_C = \{\alpha_k \cdot f(k, d)\}$$

Here, f(k, d) values come from the compliance measures. The $\alpha_k$ coefficients provide additional capability further weighting the measures per KPI and per device as need to assess the composite SLO compliance. For example, in an example, move weight might be given to application level KPIs such as throughput and latency for a driller type device, versus wireless Layer 1 type KPIs such as RSRP.

The trend computations described above can also be applied to the composite SLO compliance outputs. If the compliance measure is a scalar, the trend analysis will reveal the historical progression and provide insights into how future compliance is likely to evolve.

Depending on the value type of the composite SLO compliance output, the future progression of SLO compliance can be computed using the algorithm described above.

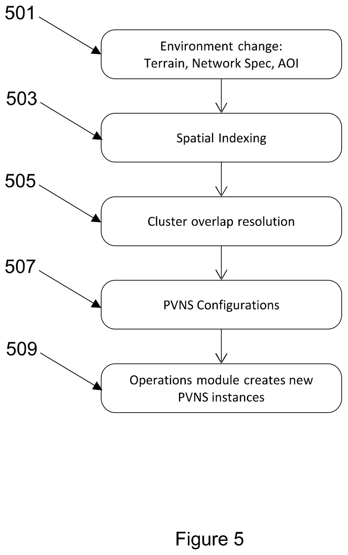

Figure 5 is a flowchart depicting an instantiation process of PVNS components, according to an example.

In block 501, each time there is, e.g., a significant change in the environment, the process of instantiating a new PVNS instance will restart. For example, such change triggers may include alterations in terrain due to explosions in open-pit mines or substantial shifts in container configurations at terminal ports.

In block 503, the Spatial Indexing system is executed across an areas-of-interest. The outcome of this will be hexagonal regions with potentially different diameters in different regions of the AOI. Uneven neighbouring hexagons will result in overlapping areas.

In block 505, the Region Overlap Selection algorithm can be used to decide which regions are picked in the overlapping areas.

In block 507, the output sets the PVNS configurations, which are created as new PVNS instances in block 509.

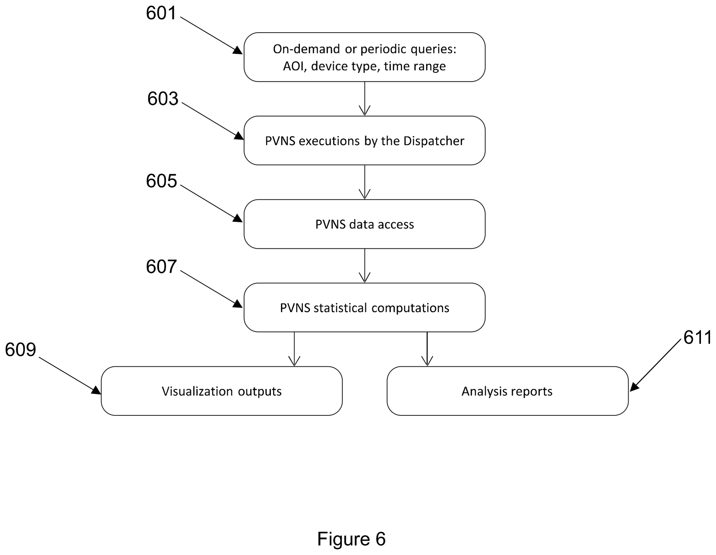

Figure 6 is a flowchart depicting a query process, according to an example. In block 601, each time on-demand or periodic queries are received, the Dispatcher sends execution requests to the PVNS instances.

In block 603, the Dispatcher regulates these requests to ensure that not all of the hundreds of PVNS component instances access the data repository simultaneously.

In block 605, upon receiving an execution request from the Dispatcher, each PVNS instance accesses the data repository to retrieve both the latest and historical data records for the specified device types and time frames, as outlined in the query record.

In block 607, the PVNS then performs the statistical computations described above.

In blocks 609, 611, the output includes high-dimensional visualizations, such as the 3D graphs, along with the analysis reports described above.

Examples in the present disclosure can be provided as methods, systems or machine-readable instructions, such as any combination of software, hardware, firmware or the like. Such machine-readable instructions may be included on a computer readable storage medium (including but not limited to disc storage, CD-ROM, optical storage, etc.) having computer readable program codes therein or thereon.

The present disclosure is described with reference to flow charts and/or block diagrams of the method, devices and systems according to examples of the present disclosure. Although the flow diagrams described above show a specific order of execution, the order of execution may differ from that which is depicted. Blocks described in relation to one flow chart may be combined with those of another flow chart. In some examples, some blocks of the flow diagrams may not be necessary and/or additional blocks may be added. It shall be understood that each flow and/or block in the flow charts and/or block diagrams, as well as combinations of the flows and/or diagrams in the flow charts and/or block diagrams can be realized by machine readable instructions.

The machine-readable instructions may, for example, be executed by a machine such as a general-purpose computer, a platform comprising user equipment such as a smart device, e.g., a smart phone, a special purpose computer, an embedded processor or processors of other programmable data processing devices to realize the functions described in the description and diagrams. In particular, a processor or processing apparatus may execute the machine-readable instructions. Thus, modules of apparatus (for example, a module implementing a converter for converting one precision format to another, such as float32 to float16 and so on, and/or a module for performing a matrix multiplication, and/or a module for applying a scaling factor to a matrix) may be implemented by a processor executing machine readable instructions stored in a memory, or a processor operating in accordance with instructions embedded in logic circuitry. The term 'processor' is to be interpreted broadly to include a CPU, processing unit, ASIC, logic unit, or programmable gate set etc. The methods and modules may all be performed by a single processor or divided amongst several processors.

Such machine-readable instructions may also be stored in a computer readable storage that can guide the computer or other programmable data processing devices to operate in a specific mode. For example, the instructions may be provided on a non-transitory computer readable storage medium encoded with instructions, executable by a processor.

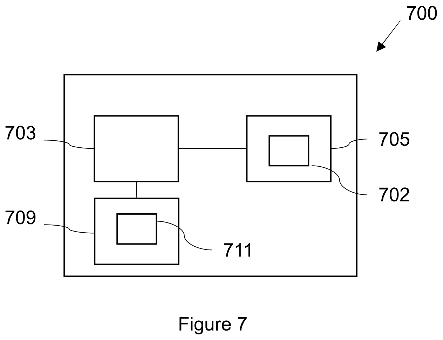

Figure 7 is a schematic representation of a machine according to an example. The machine 700 can be, e.g., a system or apparatus, user equipment, or part thereof, or a system for partitioning an area of interest, AOI, for optimized wireless network performance analysis. The machine 700 comprises a processor 703, and a memory 705 to store instructions 702, executable by the processor 703. The machine comprises a storage 709 that can be used to store data 701 as described above with reference to figures 1 to 6 for example.

The instructions 707, executable by the processor 703, can cause the machine 700 to divide an AOI into multiple regions using a selected polygonal partitioning primitive, adjust a diameter of the selected polygonal partitioning primitive for each region of the multiple regions to determine an optimized diameter for the AOI by performing, set an initial diameter for the selected polygonal partitioning primitive for selected regions of the multiple regions, calculate respective first measures for each property of a set of selected properties for each selected region of the multiple regions when the selected polygonal partitioning primitive has the initial diameter, wherein each property of the set of selected properties comprises a performance related network property, increase the diameter of the selected polygonal partitioning primitive for each selected region of the multiple regions, calculate respective second measures for each property of the set of selected properties for each selected region of the multiple regions when the selected polygonal partitioning primitive has the increased diameter, calculate, using the first measures and the second measures, a change in value of each property of the set of selected properties for each selected region of the multiple regions, and on the basis of the determination for the calculated change in value of each property, evaluate a continuation condition for adjusting the diameter of the selected polygonal partitioning primitive for each region of the multiple regions.

Accordingly, the machine 700 can implement a method for partitioning an area of interest, AOI, for optimized wireless network performance analysis.

Such machine-readable instructions may also be loaded onto a computer or other programmable data processing devices, so that the computer or other programmable data processing devices perform a series of operations to produce computer-implemented processing, thus the instructions executed on the computer or other programmable devices provide an operation for realizing functions specified by flow(s) in the flow charts and/or block(s) in the block diagrams.

Further, the teachings herein may be implemented in the form of a computer or software product, such as a non-transitory machine-readable storage medium, the computer software or product being stored in a storage medium and comprising a plurality of instructions, e.g., machine readable instructions, for making a computer device implement the methods recited in the examples of the present disclosure.

In some examples, some methods can be performed in a cloud-computing or network-based environment. Cloud-computing environments may provide various services and applications via the Internet. These cloud-based services (e.g., software as a service, platform as a service, infrastructure as a service, etc.) may be accessible through a web browser or other remote interface of the user equipment for example. Various functions described herein may be provided through a remote desktop environment or any other cloud-based computing environment.

While various embodiments have been described and/or illustrated herein in the context of fully functional computing systems, one or more of these exemplary embodiments may be distributed as a program product in a variety of forms, regardless of the particular type of computer-readable-storage media used to actually carry out the distribution. The embodiments disclosed herein may also be implemented using software modules that perform certain tasks. These software modules may include script, batch, or other executable files that may be stored on a computer-readable storage medium or in a computing system. In some embodiments, these software modules may configure a computing system to perform one or more of the exemplary embodiments disclosed herein. In addition, one or more of the modules described herein may transform data, physical devices, and/or representations of physical devices from one form to another.

The preceding description has been provided to enable others skilled in the art to best utilize various aspects of the exemplary embodiments disclosed herein. This exemplary description is not intended to be exhaustive or to be limited to any precise form disclosed. Many modifications and variations are possible without departing from the spirit and scope of the instant disclosure. The embodiments disclosed herein should be considered in all respects illustrative and not restrictive. Reference should be made to the appended claims and their equivalents in determining the scope of the instant disclosure.

## Claims

1. A computer-implemented method for partitioning an area of interest, AOI, for wireless network performance analysis, the AOI corresponding to a geophysical area to be analysed and comprising a plurality of data samples obtained from the geophysical area to be analysed, the method comprising:

   dividing the AOI into multiple regions using a polygonal partitioning primitive;
   adjusting a diameter of the polygonal partitioning primitive for each region of the multiple regions to determine an optimized diameter for the AOI by performing:

   setting an initial diameter for the polygonal partitioning primitive for each region of the multiple regions;
   calculating respective first measures for each property of a set of properties for each region of the multiple regions when the polygonal partitioning primitive has the initial diameter, wherein each property of the set of properties comprises a performance related network property;
   increasing the diameter of the polygonal partitioning primitive for each region of the multiple regions;
   calculating respective second measures for each property of the set of properties for each region of the multiple regions when the polygonal partitioning primitive has the increased diameter;

calculating, using the first measures and the second measures, a change in value of each property of the set of properties for each region of the multiple regions; on the basis of the determination for the calculated change in value of each property, evaluating a continuation condition for adjusting the diameter of the polygonal partitioning primitive for each region of the multiple regions; when the continuation condition is met, iteratively performing adjusting the diameter of the polygonal partitioning primitive for each region of the multiple regions to determine an optimized diameter for the AOI; and when the continuation condition is not met, partitioning the AOI into multiple regions having the determined optimized diameter for the AOI and outputting the regions for wireless network performance analysis.

2. The method of claim 1, further comprising analysing wireless network performance on the basis of the outputted regions.

3. The method of claim 1 or 2, further comprising:

for each region of the multiple regions, determining presence of line-of-sight, LOS, to respective ones of multiple network cells within or for the AOI; and on the basis of the determined LOS presence, calculating respective measures of a first total distance corresponding to the sum of the distances to each of the multiple network cells for each of the regions when the polygonal partitioning primitive has the initial diameter, and calculating respective measures of a second total distance corresponding to the sum of the distances to each of the multiple network cells for each of the regions when the polygonal partitioning primitive has the increased diameter; and calculating, for each region, a change in total distance using the first total distance and the second total distance; and, optionally determining that the continuation condition is met when the change in total distance is less than a distance threshold value.

4. The method of any preceding claim, wherein evaluating the continuation condition for adjusting the diameter of the polygonal partitioning primitive for each region of the multiple regions comprises:

determining an average number of data samples within each region;

comparing the determined average to a data sample threshold value; and determining that the continuation condition is met when the determined average is less than the data sample threshold value; and/or wherein evaluating the continuation condition for adjusting the diameter of the polygonal partitioning primitive for each region of the multiple regions comprises:

determining whether the calculated change in value of each property is less than a threshold value; and determining that the continuation condition is met when the calculated change in value is less than the threshold value.

5. The method of any preceding claim, wherein the network properties comprise key performance indicators, KPIs, associated with wireless network performance.

6. The method of any preceding claim, wherein for a given geolocation comprising multiple AOIs, the method further comprises partitioning each AOI of the multiple AOIs at respective different resolutions, each resolution of the multiple resolutions defined by a diameter of a polygonal partitioning primitive for regions of an AOI.

7. The method of claim 6, wherein some of the AOIs of the multiple AOIs overlap.

8. The method of any preceding claim, wherein each region is associated with a respective network management function for network performance analysis.

9. Apparatus comprising:

means for dividing an area of interest, AOI, into multiple regions using a polygonal partitioning primitive, the AOI corresponding to a geophysical area to be analysed and comprising a plurality of data samples obtained from the geophysical area to be analysed; means for adjusting a diameter of the polygonal partitioning primitive for each region of the multiple regions, whereby, to determine an optimized diameter for the AOI, the means for adjusting the diameter comprises:

means for setting an initial diameter for the polygonal partitioning primitive for regions of the multiple regions; means for calculating respective first measures for each property of a set of properties for each region of the multiple regions when the polygonal partitioning primitive has the initial diameter, wherein each property of the set of properties comprises a performance related network property;

means for increasing the diameter of the polygonal partitioning primitive for each region of the multiple regions;

means for calculating respective second measures for each property of the set of properties for each region of the multiple regions when the polygonal partitioning primitive has the increased diameter;

means for calculating, using the first measures and the second measures, a change in value of each property of the set of properties for each region of the multiple regions;

means for evaluating, on the basis of the determination for the calculated change in value of each property, a continuation condition for adjusting the diameter of the polygonal partitioning primitive for each region of the multiple regions;

means for iteratively performing, when the continuation condition is met, adjusting the diameter of the polygonal partitioning primitive for each region of the multiple regions to determine an optimized diameter for the AOI; and

means for partitioning the AOI, when the continuation condition is not met, into multiple regions having the determined optimized diameter for the AOI and outputting the regions for wireless network performance analysis.

10. The apparatus of claim 9, further comprising:

means for determining, for each region of the multiple regions, presence of line-of-sight, LOS, to respective ones of multiple network cells within or for the AOI; and

means for calculating, on the basis of the determined LOS presence, a first total distance corresponding to the sum of the distances to each of the multiple network cells over the regions when the polygonal partitioning primitive has the initial diameter, and means for calculating a second total distance corresponding to the sum of the distances to each of the multiple network cells over the regions when the polygonal partitioning primitive has the increased diameter; and means for calculating a change in total distance using the first total distance and the second total distance.

11. The apparatus of claim 9 or 10, further comprising:

means for determining an average number of data samples within each region;

means for comparing the determined average to a data sample threshold value; and

means for determining that the continuation condition is met when the determined average is less than the data sample threshold value; and/or

means for determining whether the calculated change in value of each property is less than a threshold value; and

means for determining that the continuation condition is met when the calculated change in value is less than the threshold value.

12. The apparatus of any of claims 9 to 11,further comprising:

means for determining, for each region of the multiple regions, presence of line-of-sight, LOS, to respective ones of multiple network cells within or for the AOI; and

means for calculating, on the basis of the determined LOS presence, respective measures of a first total distance corresponding to the sum of the distances to each of the multiple network cells for each of the regions when the polygonal partitioning primitive has the initial diameter, and calculating respective measures of a second total distance corresponding to the sum of the distances to each of the multiple network cells for each of the regions when the polygonal partitioning primitive has the increased diameter; and

calculating, for each region, a change in total distance using the first total distance and the second total distance; and, optionally,

means for determining that the continuation condition is met when the change in total distance is less than a distance threshold value.

EP 4 783 620 A1

Figure 1

16

Figure 2

NDT framework

301

301

307

309

303

Human perception adaptors

Core models

Exposure enablers

Functional models

Common services

311

Abstractions and adaptors

305

Domain specific segments

Cognitive agents

Spatial Indexing

Operator

Cluster Overlap Selection

PVNS Configurations

PVNS Instantiator

Query dispatcher

Predictive Vectorial Nano Simulators

Data repository

PVNSm

Figure 3

(c)

405

(b)

Figure 4

401

403

(a)

501 → Environment change:
Terrain, Network Spec, AOI

503 → Spatial Indexing

505 → Cluster overlap resolution

507 → PVNS Configurations

509 → Operations module creates new
PVNS instances

Figure 5

601 → On-demand or periodic queries:
AOI, device type, time range

603 → PVNS executions by the Dispatcher

605 → PVNS data access

607 → PVNS statistical computations

609 → Visualization outputs

Analysis reports ← 611

Figure 6

Figure 7

Europäisches
Patentamt
European
Patent Office
Office européen
des brevets

# EUROPEAN SEARCH REPORT

**Application Number**

EP 26 15 0842

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/321278 A1 (ZENG HELEN [US] ET AL) 14 October 2021 (2021-10-14) | 1,2,4-9, 11 | INV.<br>H04W4/021 |
| Y | * abstract *<br>* paragraph [0003] *<br>* paragraph [0012] - paragraph [0074] *<br>* figures 1-6 *<br>----- | 3,10,12 | H04W16/18<br>H04W24/08 |
| Y | US 11 082 862 B1 (THAKUR GAURAV [US] ET AL) 3 August 2021 (2021-08-03)<br>* abstract *<br>* column 1, line 35 - column 2, line 28 *<br>* column 3, line 17 - column 28, line 16 *<br>* figures 1-11 *<br>----- | 3,10,12 | |

**TECHNICAL FIELDS SEARCHED (IPC)**

H04W

The present search report has been drawn up for all claims

| Place of search | Date of completion of the search | Examiner |
|---|---|---|
| Munich | 9 June 2026 | Körbler, Günther |

EPO FORM 1503 03.82 (P04C01)

## ANNEX TO THE EUROPEAN SEARCH REPORT
## ON EUROPEAN PATENT APPLICATION NO.

EP 26 15 0842

This annex lists the patent family members relating to the patent documents cited in the above-mentioned European search report.
The members are as contained in the European Patent Office EDP file on
The European Patent Office is in no way liable for these particulars which are merely given for the purpose of information.

09-06-2026

| Patent document cited in search report | | Publication date | Patent family member(s) | | Publication date |
|---|---|---|---|---|---|
| US 2021321278 | A1 | 14-10-2021 | US | 2021321278 A1 | 14-10-2021 |
| | | | US | 2022295326 A1 | 15-09-2022 |
| US 11082862 | B1 | 03-08-2021 | NONE | | |

EPO FORM P0459

For more details about this annex : see Official Journal of the European Patent Office, No. 12/82